# EUROPEAN PATENT APPLICATION

(11) **EP 4 332 497 A1**
(43) Date of publication of application: **06.03.2024**
(21) Application number: 22193447.4
(22) Date of filing: 01.09.2022
(51) Int. Cl.: G01B 11/06

(54) **METHOD AND DEVICE FOR MONITORING/SURVEYING MATERIAL THICKNESS**

(71) Applicant: Mobbot SA, 1700 Fribourg (CH)
(72) Inventor: PETIT, Agnès, 1700 Fribourg (CH); PAJOVIC, Vuk, 1700 Fribourg (CH); SALOVKA, Tomas, 1700 Fribourg (CH)
(74) Representative: KATZAROV S.A.

(57) **Abstract**

The present invention relates to a material spraying monitoring/surveying method comprising the step of first scanning a surface of an object to obtain a first data matrix, wherein said first data matrix is defined by 2 angles α₍₀₎, β₍₀₎ and a distance d₍₀₎ from the device, spraying said material onto the previously scanned surface of said object, second scanning of the sprayed surface of said object to obtain a second data matrix defined by 2 angles α₍ₜ₎, β₍ₜ₎ and a distance d₍ₜ₎ from the device, processing the first and second matrices to obtain a processed data matrix defined by 2 angles α₍ₜ₎, β₍ₜ₎ and a distance difference Δd₍ₜ₎, comparing the distance difference Δd₍ₜ₎ with a target distance difference Δd displaying an information pattern representing the comparison result on said surface of said object and in real time, wherein the with information pattern represents the deviation between the target distance difference Δd and the real time measured and processed distance difference Δd(t) along the whole scanned surface.

## Description

### Technical Field

The present invention relates to a device and a method for surveying a material thickness, and more particularly to a device and a method for surveying a concrete spraying or removal process, and even more particularly, to a method and a device for measuring the distance differences between a device and the object before and after a material thickness modification.

### Background of the art

Nowadays, when building a tunnel one uses excavating machines to create the cavity and in order to prevent it from collapsing the cavity must be secured. To do this, there are several methods among which the application of sprayed concrete or the coating of concrete or any other binding agent on the excavated wall. Usually the coating of concrete consists in that a reinforcement layer and a lining layer are sprayed on the surface of the excavated tunnel. As an average, different publications estimate an over sprayed thickness between 5cm to 15 cm.

Nowadays the control of thickness of sprayed concrete is performed in particular with steel rods or other indicators placed before spraying, and after execution of works with surveying methods. These methods do not allow for precise control of sprayed material thickness during execution and are also complicated to perform using highly qualified resources.

The currently used method with pre-installed thickness indicators leads to overuse of material. The main constraint during material placing in the minimum required thickness of layer. To assure that this design requirement is met, which can be detected only during post-execution verification with surveying methods, the contractors tend to place layer of thickness larger than required. This leads to extensive use of material, and often need of removal of the excess material.

The costs of these operations the immobilized equipment and of the used concrete are high. In consequence, every process and operations that can be boosted will have a direct and indirect cost savings. This situation requires a system that permits surveying a material spraying process and thus informing in the most reliable and rapid manner the user of the concrete thickness of the sprayed wall in order to limit the overspray (or the underspray).

This is why it is of importance to find ways to enhance the precision of real-time layer thickness measurement. It should give a direct and clear feedback to spraying person regarding already achieved thickness of layer and/or required remaining thickness, allowing for adoption of the correct spraying strategy. Such a method would allow not only for reduction of material consumption, but also avoidance of necessary corrections, reprofiling and returning to already completed sections of tunnel, wall or other structural element.

There exists already few products and inventions aiming these goals. For example document WO 2012/079014 proposes a convention device for measuring a thickness of a wall and displaying information on the thickness of a wall. However, the described device uses a total station as well as external prisms for positioning and measures the deviation between the image captured and the predefined wished wall profile. The invention is only capable of measuring the cases when material is added, and it is not usable for subtractive process. Also, it is not displaying the thickness result in an iterative and dynamic way.

Tunnel scanners have been used since mid-1990s for 3D geometric reconstruction or to measure the tunnel surface in a grid using distance measurements. All these systems have in common to capture a cloud point, process and display the results on an external screen after reconstruction of 3D image of the tunnel surface. The aforementioned systems measure the distance usually when the spray is done once a week, once a day as a control. The correction of thickness must be done afterward leading eventually to a bad cohesion between concrete /material layers. Unfortunately, in case of over sprayed this material can not be removed. The data processing of the cloud point acquired with conventional scanner are processed offsite, displayed on a tablet and do not display them in a dynamic mode.

Other methods consist of a radar-based technology. For example, document WO2014/054997 A1 shows a conventional device using a radar. However, in this document, the device uses a total station and robot spraying arm for the positioning. The radar sensors are mounted on the spraying nozzle and reconstruct a cloud point based on the position of the sensor and nozzle versus a total station and the spraying machine position. The thickness is calculated from the difference between the radar sensors positioned on the nozzle, but the position of that thickness in world is then calculated from the position of the robot spraying arm and the total station.

However, main obstacle is within display of the results of the scanned area. They are usually displayed on a screen, either installed on the spraying machine or portable. This makes difficult to associate the obtained results with a position on the sprayed surface, and therefore to efficiently apply this knowledge by the site personnel for improved precision of sprayed layer thickness.

Therefore, there exists a need for a new device being able not only to measure but also to present the obtained information regarding thickness in the working environment and in a clear, accessible and dynamic or real-time manner. This is the main novelty of the current invention

None of the existing products are capable of live displaying of the concrete thickness while spraying / while executing the deposition or removal of the material without manually cleaning of the sensor. By live displaying it is meant dynamic scanning of the thickness of a wall while the modification of said thickness is performed and the result is changing, and the thickness is built up. They are all exposed during scanning. They have enclosed sensors, can be protected while spraying, can be used to scan during pauses and provide data at intervals.

In this regard, a primary object of the invention is to solve the above-mentioned problems and more particularly to provide a system and a method which can support an operator in his/her daily job by reliably informing an operator of the spraying thickness.

A further object of the invention it to provide device and a method for surveying a material spraying process in real time.

### Summary of the invention

The invention is a method and a device allowing for real-time measurement and indication of the sprayed material and/or the remaining thickness to be sprayed. The invention consists of a measurement and of a display systems.

The measurement system is based on LiDAR or other laser-based system. The measurement system performs a reference measurement before spraying, and subsequent measurements during or after the spraying process. The measurements can be taken continuously or on demand.

The subsequent measurements are compared with the reference measurement with the computer software. The computer is a part of the device. The difference between reference and currently measured surface is calculated as set of point-cloud or continuous surfaces. On this basis the current thickness of sprayed layer or layers can be calculated.

The display system consists of one or several image projectors plugged to the computer. The system presents the sprayed layer thickness as color map, isolines, digits or in similar way. The display of results can be continuous or on demand.

An alternative method of presentation of results is the remaining thickness with reference to the required thickness. The required thickness is introduced into software digitally or manually, e.g. using tablet, keypad or potentiometer of similar. Then, using previously calculated thickness of sprayed layer, the software calculates the remaining thickness and sends it to the display system.

The method can be used for both additive method of production, such as spraying of material, and for subtractive method of production, such as subsequent removal of material through grinding or any other process.

The above problems are solved by the present invention which is
A first aspect of the invention is a material thickness monitoring/surveying method comprising the steps of first scanning of an initial surface, said scanned initial surface being defined by two angles α₍₀₎, β₍₀₎, wherein α₍₀₎ is the scanning rotation angle and β₍₀₎ is the scanning width and a distance d₍₀₎ from the scanning device, obtaining a first data matrix, wherein said first data matrix comprises a plurality of points of said scanned initial surface, wherein each point is defined by two specific angles α'₍₀₎, β'₍₀₎, and a distance d'₍₀₎ from the scanning device, defining a second data matrix representing a target surface based on the first data matrix of the scanned initial surface and a target material thickness, wherein each point of the second data matrix corresponds to a point of the first data matrix and is defined by two specific angles α'₍₁₎, β'₍₁₎, and a distance d'₍₁₎ from the scanning device, modifying the material thickness onto the previously scanned initial surface to obtain a final surface, second scanning of the final surface, said scanned final surface being defined by two angles α₍₂₎, β₍₂₎, wherein α₂₎ is the scanning rotation angle and β₍₂₎ is the scanning width and a distance d₍₂₎ from the scanning device to obtain a third data matrix wherein each point of the third data matrix corresponds to a point of the second data matrix and is defined by two specific angles α'₍₂₎, β'₍₂₎, and a distance d'₍₂₎ from the scanning device, processing the second and third matrices to obtain a processed data matrix defined by two angles α₍ₜ₎, β₍ₜ₎ and a distance difference Δd₍ₜ₎ representing the distance difference of each point the scanned surface between the final surface and the target surface, displaying an information pattern representing the distance difference Δd₍ₜ₎ for each point on said final surface.

According to a preferred embodiment of the present invention, the material thickness variation and the second scanning are carried out simultaneously or quasi simultaneously.

Advantageously, the information is a color code and/or a number representing the Δd(t).

In a preferred manner, color code is a continuously changing color code following the amplitude of Δd(t).

Preferably, the initial area and the final area are the same.

According to a preferred embodiment of the present invention, the second scanning is repeated several times.

Preferably, the material is cement concrete.

Advantageously, the scanned surfaces are surfaces of a wall.

In a preferred manner, A second aspect of the invention is a material thickness monitoring/surveying device adapted to carry out the material thickness monitoring/surveying method of the first aspect of the invention and comprising a rotative scanning module adapted to carry out a first scan of an initial surface before a material deposition, which is defined by 2 angles α₍₀₎, β₍₀₎ and a first distance d₍₀₎ from the device, and a second scan of said surface after or during deposition, which is defined by 2 angles α₍ₜ₎, β₍ₜ₎ and a second distance d₍ₜ₎ from the device, at least one information generating module adapted to project on the surface of said wall an information representing a distance difference Δd₍ₜ₎ between each point of a deposited surface and each corresponding point of a target surface, characterized in that the projection module is adapted to project the information on the scanned surface so as to define the zones where the distance difference is correct and the zones where the distance difference is not. The particular advantages of this device of the invention being similar to the ones of the method of the first aspect of the invention, they will not be repeated here.

According to a preferred embodiment of the present invention, the device further comprises a material thickness variation module adapted to deposit or remove material on/from a target surface.

Advantageously, the material thickness variation module is adapted to deposit said material by spraying or gluing or to remove said material by hydro-demolition or blasting.

According to a preferred embodiment of the present invention, the device further comprises at least one radio beacon for data and/or information transmission.

Preferably, the transmitted data and/or information are chosen in the group comprising angles α₍ₜ₎, β₍ₜ₎ and distance difference Δd₍ₜ₎.

In a preferred manner, the material spraying module adapted to deposit additional material onto the zones where the distance difference Δd₍ₜ₎ shows that material is missing.

Advantageously, the scanning module is able to rotate along an axis so as to be able to scan parallel on the entire surface.

According to a preferred embodiment of the present invention, the scanning module is a Lidar scanner or depth cameras

### Brief description of the drawings

Further particular advantages and features of the invention will become more apparent from the following non-limitative description of at least one embodiment of the invention which will refer to the accompanying drawings, wherein
- Figures 1A, 1B and 1C represent two views of the material thickness monitoring/surveying device of the present invention and self-propelled robot comprising the material thickness monitoring/surveying device;
- Figure 2 represents a general view of the device functioning in a tunnel;
- Figure 3 schematically represents how is defined a point of a scanned surface;
- Figure 4 schematically represents four views representing the difference in coordinate of a point before and after deposition.

### Detailed description of the invention

The present detailed description is intended to illustrate the invention in a non-limitative manner since any feature of an embodiment may be combined with any other feature of a different embodiment in an advantageous manner.

By material thickness monitoring/surveying method, it is intended that the method monitors/surveys either the thickness of a material after a deposition of said material on a target surface or the thickness of a material, previously deposited, after a removal of said material from a target surface.

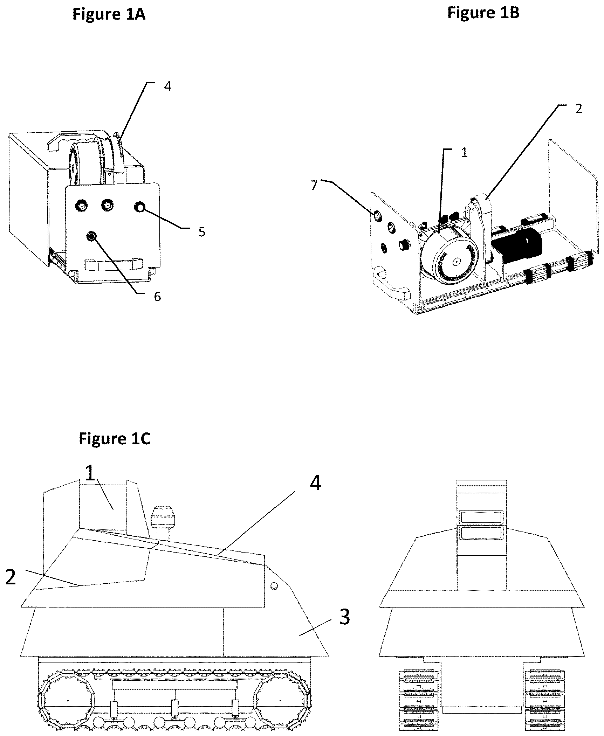

Figures 1A and 1B show two different views of a material thickness monitoring/surveying device of the invention which is adapted to carry out a monitor/survey of a material thickness of a tunnel wall by scanning a predetermined surface corresponding to a portion of the inner surface of the tunnel wall preferably before and after material deposition but also possibly simultaneously.

The device comprises a rotative scanning module 1, for example a Lidar scanner or depth cameras, adapted to carry out a first scan of an initial surface before a material deposition, preferably cement concrete deposition or the like, which is defined by 2 angles α₍₀₎, β₍₀₎ and a first distance d₍₀₎ from the device, and a second scan of preferably the same surface after or during the said deposition, which is defined by 2 angles α₍ₜ₎, β₍ₜ₎ and a second distance d₍ₜ₎ from the device.

It also comprises one or more information generating module 4, for example a projector or the like, adapted to project on the surface of said wall an information representing the scanning results preferably representing a distance difference Δd₍ₜ₎ between each point of a deposited surface and each corresponding point of a target surface. In order to be able to scan the entire surface of the tunnel wall, the scanning module is able to rotate along an axis so as to be able to scan parallel on the entire surface.

In the preferred embodiment, the projection module is adapted to project the information on the scanned surface so as to define the zones where the distance difference is correct and the zones where the distance difference is not.

Figures 1C also represents a material thickness measurement robot composed of the material thickness monitoring/surveying device of the invention which in turn comprises two devices the scanning and displaying device modules. More particularly, Figure1C represents a self-propelled robot with a mounted device composed of the material thickness monitoring/surveying device including the scanning device 1 and the displaying result device 4, preferably a gear box 2, a servo drive 3, a potentiometer 5, a reset button 6, a ready light 7 and possibly a water and air cleaning system.

Preferably, it further comprises at least one radio beacon for data and/or information transmission wherein the transmitted data and/or information are preferably chosen in the group comprising angles α₍ₜ₎, β₍ₜ₎ and distance difference Δd₍ₜ₎.

Finally, it may also comprise an integrate positioning module as well as a displacement mechanism so as to be moved, preferably along the tunnel axis.

As mentioned above the material thickness monitoring/surveying device is adapted to carry out a monitor/survey method of a material thickness deposited on a wall.

Preferably, the material thickness monitoring/surveying device of the invention is used conjointly with a material thickness variation module is adapted to deposit the material by spraying or gluing or to remove said material by hydro-demolition or blasting. Preferably, the material thickness variation module is a material spraying module adapted to deposit additional material onto the zones where the distance difference Δd₍ₜ₎ shows that material is missing. The monitor/survey method will now be detailed.

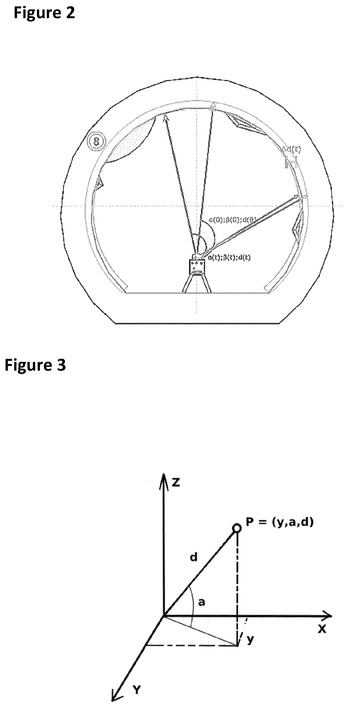

The material thickness monitoring/surveying method first comprises a step of first scanning of an initial inner surface of the tunnel wall, which is defined by two angles α₍₀₎, β₍₀₎, wherein α₍₀₎ is the scanning rotation angle and β₍₀₎ is the scanning width and a distance d₍₀₎ from the scanning device as shown in figure 2.

The first scanning permits to obtain a first data matrix comprising a plurality of points defined by two specific angles α'₍₀₎, β'₍₀₎, and a distance d'₍₀₎ from the scanning device as shown in figure 2 wherein each point represents a predetermined point or sub-area of said scanned initial surface.

Then, the method comprises a step of determining a second data matrix representing a target surface based on the first data matrix of the scanned initial surface and a target material thickness. The target material thickness depends on several factors such as the expected resistance of the wall, the purpose of the sprayed layer, i.e. safety, or waterproofing layer, the geology, the type of sprayed material used.

As in the first scanning step, each point or sub-area of the second data matrix corresponds to a point or a sub-area of the first data matrix and is defined by two specific angles α'₍₁₎, β'₍₁₎, and a distance d'₍₁₎ from the scanning device.

At this stage it is of course optionally possible to already calculate the theoretical distance difference Δd between the initial surface and the expected surface.

The third step is a material deposition or removal step consisting in modifying the material thickness onto the previously scanned initial surface, to obtain a final surface.

The fourth step comprising the second scanning of the final surface can be carried out after termination of the third step, i.e. once the deposition or removal of material is terminated, or simultaneously with the third step so as to monitor the thickness in real time.

In this fourth step, the scanned final surface is defined by two angles α₍₂₎, β₍₂₎, wherein α₂₎ is the scanning rotation angle and β₍₂₎ is the scanning width and a distance d₍₂₎ from the scanning device as shown in figure 2.

The second scanning permits to obtain a third data matrix comprising a plurality of points defined by two specific angles α'₍₂₎, β'₍₂₎, and a distance d'₍₂₎ from the scanning device as shown in figure 2 wherein each point of the third data matrix corresponds to a point of the second data matrix and represents a predetermined point or sub-area of said scanned final surface. Of course, the second scanning can be repeated several times until the correct thickness is reached.

Then, the method comprises the step of processing the second and third matrices to obtain a processed data matrix defined by 2 angles α₍ₜ₎, β₍ₜ₎ and a distance difference Δd₍ₜ₎ representing the distance difference of each point of the scanned surface between the overlapping region of the final surface and the target surface, which means the entire scanned surface is they are identical.

Once the distance difference Δd₍ₜ₎ is calculated, a final step of displaying an information pattern representing the distance difference Δd₍ₜ₎ for each point on said final surface.

The projected information is preferably a color code and/or a number representing the Δd(t) or the like, and when, the second scanning step is carried out simultaneously with the deposition step, the information preferably continuously changes following the amplitude of Δd(t) so as to have the information in real time. In addition to that, the information generating module can project a frame representing the target area were the scan and the material deposition/removal will happen. This permits to enhance that material deposition/removal accuracy.

Figure 3 shows a 3D graphic representing how is defined each point of the scanned surfaces. Considering hat the scanning device is positioned at P =(0;0;0) the three coordinates i.e. 2 angles α, β and the distance d are measured for each data matrices. As we can see angle beta is calculated via the y coordinate.

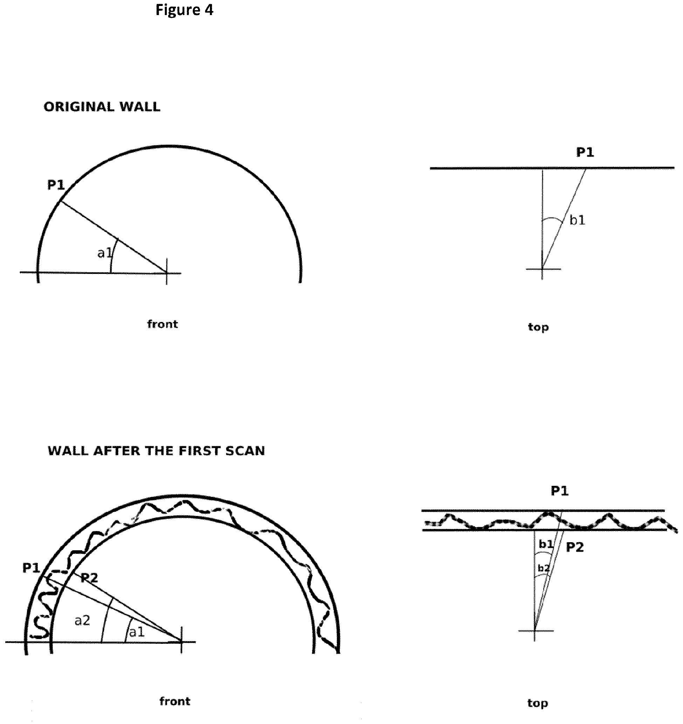

Figure 4 schematically shows a front a top view of a wall before and after deposition. This permits to represent the coordinate difference of an arbitrary point between the two sates (before and after deposition or removal, not represented), this explains why for most of the points the 2 angles α₍ₜ₎, β₍ₜ₎ and the distance Δd₍ₜ₎ of each point is modified with the exception of the points situated exactly in the center of the scanned surface, i.e. exactly in front of the scanning device, and therefore comprised in plan perpendicular to the tunnel surface and comprising the scanning objective where beta is constant.

While the embodiments have been described in conjunction with a number of embodiments, it is evident that many alternatives, modifications and variations would be or are apparent to those of ordinary skill in the applicable arts. Accordingly, this disclosure is intended to embrace all such alternatives, modifications, equivalents and variations that are within the scope of this disclosure. This for example particularly the case regarding the different apparatuses which can be used.

## Claims

1. Material thickness monitoring/surveying method comprising the steps of
first scanning of an initial surface, said scanned initial surface being defined by two angles α₍₀₎, β₍₀₎, wherein α₍₀₎ is the scanning rotation angle and β₍₀₎ is the scanning width and a distance d₍₀₎ from the scanning device,
obtaining a first data matrix, wherein said first data matrix comprises a plurality of points of said scanned initial surface, wherein each point is defined by two specific angles α'₍₀₎, β'₍₀₎, and a distance d'₍₀₎ from the scanning device,
defining a second data matrix representing a target surface based on the first data matrix of the scanned initial surface and a target material thickness, wherein each point of the second data matrix corresponds to a point of the first data matrix and is defined by two specific angles α'₍₁₎, β'₍₁₎, and a distance d'₍₁₎ from the scanning device,
modifying the material thickness onto the previously scanned initial surface to obtain a final surface,
second scanning of the final surface, said scanned final surface being defined by two angles α₍₂₎, β₍₂₎, wherein α₂₎ is the scanning rotation angle and β₍₂₎ is the scanning width and a distance d₍₂₎ from the scanning device to obtain a third data matrix wherein each point of the third data matrix corresponds to a point of the second data matrix and is defined by two specific angles α'₍₂₎, β'₍₂₎, and a distance d'₍₂₎ from the scanning device,
processing the second and third matrices to obtain a processed data matrix defined by 2 angles α₍ₜ₎, β₍ₜ₎ and a distance difference Δd₍ₜ₎ representing the distance difference of each point the scanned surface between the final surface and the target surface,
displaying an information pattern representing the distance difference Δd₍ₜ₎ for each point on said final surface.

2. Material thickness monitoring/surveying method according to claim 1, **characterized in that** the material thickness variation and the second scanning are carried out simultaneously.

3. Material thickness monitoring/surveying method according to anyone of claims 1 to 2, **characterized in that** the information is a color code and/or a number representing the Δd(t).

4. Material thickness monitoring/surveying method according to anyone of claims 1 to 3, **characterized in that** the color code is a continuously changing color code following the amplitude of Δd(t).

5. Material thickness monitoring/surveying method according to anyone of claims 1 to 4, **characterized in that** the initial area and the final area are the same.

6. Material thickness monitoring/surveying method according to anyone of claims 1 to 5, **characterized in that** the second scanning is repeated several times.

7. Material thickness monitoring/surveying method according to anyone of claims 1 to 6, **characterized in that** the material is cement concrete.

8. Material thickness monitoring/surveying method according to any one of claims 1 to 7, **characterized in that** the scanned surfaces are surfaces of a wall.

9. Material thickness monitoring/surveying method according to claim 8, **characterized in that** the wall is a tunnel wall, and the scanned surface is a portion of its inner surface.

10. Material thickness monitoring/surveying device adapted to carry out the material thickness monitoring/surveying method of any one of claims 1 to 9 comprising:
a rotative scanning module adapted to carry out a first scan of an initial surface before a material deposition, which is defined by 2 angles α₍₀₎, β₍₀₎ and a first distance d₍₀₎ from the device, and a second scan of said surface after or during deposition, which is defined by 2 angles α₍ₜ₎, β₍ₜ₎ and a second distance d₍ₜ₎ from the device,
at least one information generating module adapted to project on the surface of said wall an information representing a distance difference Δd₍ₜ₎ between each point of a deposited surface and each corresponding point of a target surface,
**characterized in that** the projection module is adapted to project the information on the scanned surface so as to define the zones where the distance difference is correct and the zones where the distance difference is not.

11. Device according to claim 10, **characterized in that** it further comprises a material thickness variation module adapted to deposit or remove material on/from a target surface.

12. Device according to claim 11, **characterized in that** the material thickness variation module is adapted to deposit said material by spraying or gluing or to remove said material by hydro demolition or blasting.

13. Device according to claim 10 to 12, **characterized in that** it further comprises at least one radio beacon for data and/or information transmission.

14. Device according to claim 13, **characterized in that** the transmitted data and/or information are chosen in the group comprising angles α₍ₜ₎, β₍ₜ₎ and distance difference Δd₍ₜ₎.

15. Device according to any one of claims 11 to 14, **characterized in that** the material spraying module adapted to deposit additional material onto the zones where the distance difference Δd₍ₜ₎ shows that material is missing.

16. Device according to any one of claims 10 to 15, **characterized in that** the scanning module is able to rotate along an axis so as to be able to scan parallel on the entire surface.

17. Device according to any one of claims 10 to 16, **characterized in that** the scanning module is a Lidar scanner or depth cameras

18. Device according to any one of claims 10 to 17, **characterized in that** it comprises an integrate positioning module.
